(19) Europäisches Patentamt
European Patent Office
Office européen des brevets

(11) EP 1 431 314 B1

(12) **EUROPEAN PATENT SPECIFICATION**

(45) Date of publication and mention of the grant of the patent:
**16.11.2005 Bulletin 2005/46**

(51) Int Cl.[7]: **C08F 2/38**, C08F 12/04, C07F 7/08

(21) Application number: **03079067.9**

(22) Date of filing: **15.12.2003**

(54) **process for the living radical polymerization of olefinically unsaturated monomers**

Verfahren zur lebenden Radikalpolymerisation olefinisch ungesättigter Monomere

Procédé de polymérisation radicalaire vivante de monomères oléfiniquement insaturés

(84) Designated Contracting States:
**AT BE BG CH CY CZ DE DK EE ES FI FR GB GR HU IE IT LI LU MC NL PT RO SE SI SK TR**

(30) Priority: **20.12.2002 IT MI20022703**

(43) Date of publication of application:
**23.06.2004 Bulletin 2004/26**

(73) Proprietors:
- **ENI S.p.A.**
  **00144 Roma (IT)**
- **Polimeri Europa S.p.A.**
  **72100 Brindisi (IT)**

(72) Inventors:
- **Cardi, Nicoletta**
  **28046 Meina (Novara) (IT)**
- **Alberti, Angelo**
  **40122 Bologna (IT)**
- **Laus, Michele**
  **15100 Alessandria (IT)**
- **Benaglia, Massimo**
  **47100 Forli (IT)**
- **Sparnacci, Katia**
  **47852 Ospedaletto (Rimini) (IT)**

(74) Representative: **De Gregori, Antonella**
**Ing. Barzano' & Zanardo Milano S.p.A.**
**Via Borgonuovo 10**
**20121 Milano (IT)**

(56) References cited:
**WO-A-01/42312**
**WO-A-98/01478**
**WO-A-99/05099**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 431 314 B1

## Description

The present invention relates to a process for the living radical polymerization of olefinically unsaturated monomers.

More specifically, the present invention relates to a polymerization process, by means of free radicals, having the characteristics of a living polymerization system as it is capable of producing polymers having a pre-determined molecular weight with a very narrow molecular weight distribution and, following the subsequent addition of different monomers, can be used for producing block polymers. This process can consequently be used for producing polymers with a complex architecture, for example variously branched homo and copolymers.

Papers and patents have appeared in literature in the last few years, in which block copolymers are synthesized by means of "living" radical polymerization, a more ductile technique with respect to other forms of polymerization, such as anionic polymerization, which does not require an excessive purity of the monomers.

Examples of scientific literature which describe living radicalic polymerization are "Makromolecular Chemistry, Rapid Communication", 1982, 3, 127 which describes the use of so called "iniferters" which behave like thermal and/or photo-chemical initiators as well as chain transfer and terminator agents; "Makromolecular Chemistry", 1983, 184, 745, which describes tetra-aryl ethanes which thermally decompose to give diphenyl alkyl radicals. These products are another example of initiators capable of providing living radical polymerization; "Journal of Polymer Science, Polymer Chemistry" Ed, 1986, 24, 1251 which describes living radical polymerization effected through silylated pinacols which behave in the same way as the tetra-aryl ethanes mentioned above.

Other examples of patent literature which indicate living radical polymerization are represented by European patent 135,280 and international patent applications WO 96/30421 and WO 01/42312. International patent application WO 98/01478 describes structures of the type:

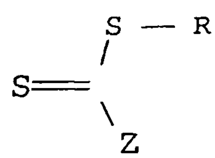

wherein Z represents a hydrogen, chlorine, an alkyl group, possibly substituted, an aryl, possibly substituted, a cycloether, an alkylthio group, possibly substituted, an aryloxy carbonyl, an acyloxy carbonyl, a carbamoyl, possibly substituted, a diaryl phosphonate, etc. Structures in which Z is a Si atom are not described.

A new living radical polymerization process of olefinically unsaturated monomers has now been found by the Applicant, and this forms an object of the present invention, which comprises (co)polymerizing an olefin with a catalytic system comprising:

a thioester containing silicon atoms having general formula (I)

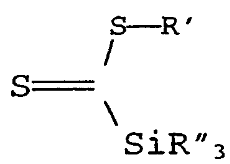

wherein R' is a $C_3$-$C_{20}$ alkyl or $C_7$-$C_{20}$ alkyl aryl group, whereas the R" groups, the same or different, represent a phenyl group, a $C_1$-$C_{10}$ alkyl group, a $C_7$-$C_{20}$ alkyl aryl group, and optionally

a free radical generator, soluble in the reaction medium, active at the (co)polymerization temperature.

Any olefinic monomer can be used in the process, object of the present invention, even if vinyl aromatic monomers used alone or in a mixture with 0-50% by weight of other olefinically unsaturated monomers, are preferred.

The term "vinyl aromatic monomer", as used in the present invention and claims, essentially refers to at least one product which corresponds to the following general formula (II):

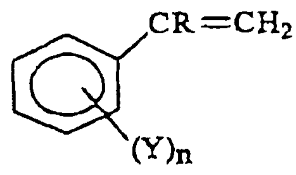

(II)

wherein R is a hydrogen or methyl group, n is zero or an integer ranging from 1 to 5 and Y is a halogen, such as chlorine or bromine, or an alkyl or alkoxyl radical having from 1 to 4 carbon atoms.

Examples of vinyl aromatic monomers having the general formula indicated above are: styrene, α-methyl styrene, methyl styrene, ethyl styrene, butyl styrene, dimethyl styrene, mono-, di-, tri-, tetra-, and penta-chloro styrene, bromo-styrene, methoxy-styrene, acetoxy-styrene, etc. Preferred vinyl aromatic monomers are styrene and α-methyl styrene.

The vinyl aromatic monomers having general formula (II) can be used alone or in a mixture with up to 50% by weight of other copolymerizable monomers. Examples of these monomers are (meth)acrylic acid, $C_1$-$C_4$ alkyl esters of (meth)acrylic acid such as methyl acrylate, methyl methacrylate, ethyl acrylate, ethyl methacrylate, isopropyl acrylate, butyl acrylate, amides and nitriles of (meth)acrylic acid such as acryl amide, methacryl amide, acrylonitrile, methacrylonitrile, butadiene, ethylene, divinyl benzene, maleic anhydride, etc. Preferred copolymerizable monomers are acrylonitrile and methyl methacrylate.

The copolymerization is carried out at a temperature higher than 50°C, preferably from 60 to 120°C, in the presence of the initiator having general formula (I). The latter is present in such concentrations as to trigger the (co) polymerization reaction and terminate it when the desired molecular weight has been reached. Typical concentrations range from 0.01 to 2% in moles with respect to the total moles of the monomers fed.

In order to favour the (co)polymerization reaction, the initiator having general formula (I) can be used in a mixture with radical generator compounds (G) such as peroxides, hydroperoxides, peresters, percarbonates, azobis dialkyl dinitriles, etc. with I/G molar ratios lower than 8. In particular, the initiator having general formula (I) can be used with free radical generators (G) such as dibenzoyl peroxide, dicumyl peroxide, dilauryl peroxide, t-butyl peroxy acetate, t-butyl peroxy benzoate, di-isopropyl peroxy dicarbonate, dicyclohexyl peroxy dicarbonate, N,N'-azobis isobutyronitrile (AIBN) with I/G molar ratios ranging from 1 to 8.

Examples of initiators having general formula (I) are:

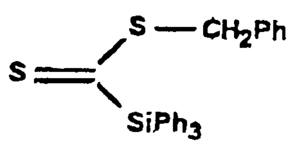

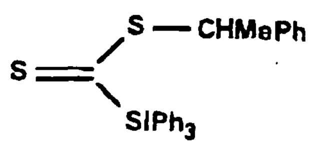

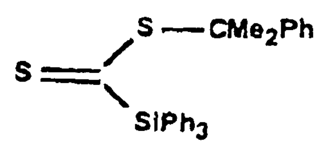

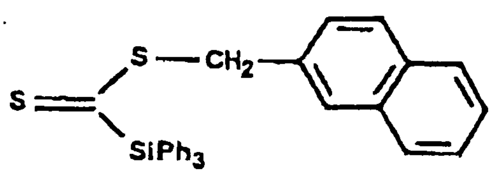

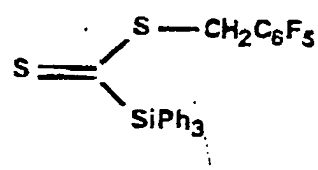

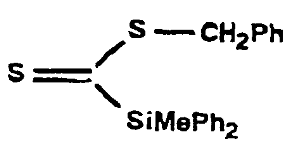

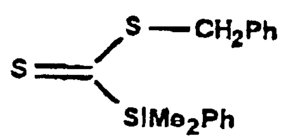

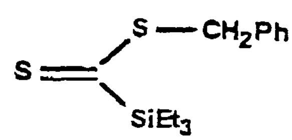

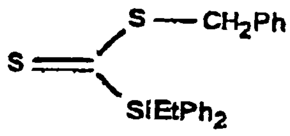
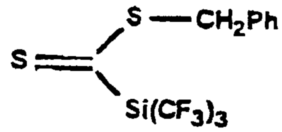
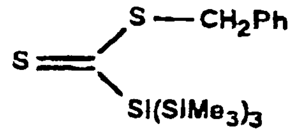

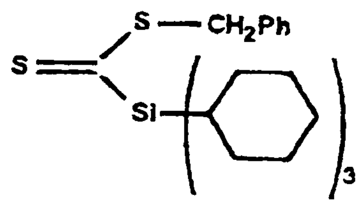

The products having general formula (I) are new products, which have never been described in literature and can be obtained by the reaction of disilanes with metal lithium, subsequent reaction with carbon sulfide and reaction of the lithium silyl dithioformiate derivative, for example with benzyl halides.
The (co)polymerization can be carried out batchwise, in continuous, or semi-continuous at a temperature higher than 50°C and at a pressure which is such as to maintain the monomers in liquid phase. Furthermore the (co) polymerization can take place in the presence of an organic solvent, in suspension or in mass.
In the batch process, the initiator system is added to the olefinic monomer, pure or in the form of a solution or suspension in the above-mentioned quantities. The reaction is continued at the desired temperature for a period of time ranging from 15 minutes to 24 hours. At the end the (co)polymer thus produced is recovered.
In the continuous process, the olefinic monomer, initiator system and, optionally, the solvent are fed in continuous to a (co)polymerization reactor at a flow-rate which is such as to provide suitable residence times for reaching conversions ranging from 5 to 99.9%. At the outlet of the reactor, the reaction mixture is treated for the recovery of the product. In particular, the polymer is isolated from the polymerization mixture with one of the methods known in the art, for example by precipitation with a suitable non-solvent or by distillation, and removal of the residues under vacuum, at a high temperature.
At the end of the process, object of the present invention, (co)polymers are obtained, with an average molecular weight Mw ranging from 5,000 to 1,000,000, preferably from 20,000 to 500,000.
Some illustrative and non-limiting examples are provided for a better understanding of the present invention and for its embodiment.

EXAMPLE 1 (comparative)

Preparation of benzyl dithio benzoate **(1)**.

304 mg/4 mmoles of $CS_2$ are slowly added (20 minutes) to a solution of phenyl magnesium bromide (628 mg/ 4 mmoles of bromo benzene and 100 mg/4 mga of magnesium) in THF (3 ml) heated to 313K. 770 mg/4.5 mmoles of benzyl bromide are then added to the resulting mixture, which is brought to 323K and left for about an hour. After adding frozen water, the mixture is extracted with ethyl ether and the ether phase is repeatedly washed with water, anhydrified and then dried by eliminating the solvent at reduced pressure.
The residue is distilled at reduced pressure (324 K/2 mmHg) and about 600 mg/2.5 mmoles of **(1)** are obtained in the form of a dark red oil (yield 62.5%). $^1$H-NMR/200MHz ($CDCl_3$, $\delta$, ppm from TMS): 4.60 (s, 2H), 7.30-7.60 (m, 8H), 8.02 (s, 2H).

EXAMPLE 2

Preparation of benzyl triphenylsilyl dithioformiate **(2)**.

1,179 g/4 mmoles of $Ph_3SiCl$ are reacted with 69.4 mg/10 mga of lithium in 20 ml of anhydrous THF under stirring and in an argon atmosphere. After about 15 hours of stirring, the excess lithium is eliminated from the dark red resulting solution, which is cooled to 195K and 381 mg/5 mmoles of $CS_2$ are then added. After stirring for 30 minutes 684 mg/4 mmoles of benzyl bromide are added and the temperature is left to rise to 298K. After a further 30 minutes

of stirring, 100 ml of cyclohexane are added, the mixture is filtered, the filtrate is dried under reduced pressure and the residue is chromatographed on silica gel using a mixture of hexane/toluene (80/20) as eluant.
$^{1}$H-NMR/400MHz ($CDCl_3$, δ, ppm from TMS): 4.617 (s, 2H), 7.20-7.51 (m, 14H), 7.658 (d, J = 7 Hz, 6H).
$^{13}$C-NMR/100MHz ($CDCl_3$, δ, ppm from TMS): 39.712, 127.342, 127.496, 127.726, 128.450, 129.097, 130.059, 131.772, 136.384, 257.186.
m/z: 335 ($m^+$ - benzyl, 100), 315, 291.

EXAMPLE 3

Preparation of pentafluorobenzyl triphenylsilyl dithioformiate (**3**).

1,179 g/4 mmoles of $Ph_3SiCl$ are reacted with 69.4 mg/10 mga of lithium in 20 ml of anhydrous THF under stirring and in an argon atmosphere. After about 15 hours of stirring, the excess lithium is eliminated from the dark red resulting solution, which is cooled to 195K and 381 mg/5 mmoles of $CS_2$ are then added. After stirring for 30 minutes 1,044 g/4 mmoles of pentafluorobenzyl bromide are added and the temperature is left to rise to 298K. After a further 30 minutes of stirring, 100 ml of cyclohexane are added, the mixture is filtered, the filtrate is dried under reduced pressure and the residue is chromatographed on silica gel using a mixture of hexane/toluene (80/20) as eluant.
$^{1}$H-NMR/400MHz ($CDCl_3$ δ, ppm from TMS): 4.645 (s, 2H), 7.35-7.56 (m, 9H), 7.368 (d, J = 6.5 Hz, 6H).
$^{13}$C-NMR/100MHz ($CDCl_3$, δ, ppm from TMS) : 29.842, 127.818, 130.621, 131.291, 135.191, 163.363, 137.37 (bd, $J_{CF}$ = 245.6 Hz), 140.63 (bd, $J_{CF}$ = 252.2 Hz), 144.87 (bd, $J_{CF}$ = 248.9 Hz), 256.438.
m/z: 468 ($m^+$ - $H_2S$), 277 (100), 181 ($C_6F_5CH_2$) .

EXAMPLE 4

Preparation of benzyl methyl diphenylsilyl dithioformiate (**4**)

931 mg/4 mmoles of $Ph_2MeSiCl$ are reacted with 69.4 mg/10 mga of lithium in 20 mL of anhydrous THF under stirring and in an argon atmosphere. After about 15 hours of stirring, the excess lithium is eliminated from the dark red resulting solution, which is cooled to 195K and 381 mg/5 mmoles of $CS_2$ are then added. After stirring for 30 minutes 684 mg/4 mmoles of benzyl bromide are added and the temperature is left to rise to 298K. After a further 30 minutes of stirring, 100 mL of cyclohexane are added, the mixture is filtered, the filtrate is dried under reduced pressure and the residue is chromatographed on silica gel using a mixture of hexane/toluene (80/20) as eluant.
$^{1}$H-NMR/400MHz ($CDCl_3$, δ, ppm from TMS): 0.716 (s, 3H), 4.010 (s, 2H), 7.30-7.45 (m, 11H), 7.606 (d, J = 7.7 Hz, 4H).
$^{13}$C-NMR/100MHz ($CDCl_3$, δ, ppm from TMS): -1.872, 40.161, 127.508, 127.645, 128.288, 128.867, 129.395, 134.226, 134.800, 136.067, 259.628.
m/z: 286, 271, 211 (100), 193, 151.

EXAMPLE 5

Preparation of pentafluorobenzyl methyl diphenyl silyl dithioformiate **(5)**.

931 mg/4 mmoles of $Ph_2MeSiCl$ are reacted with 69.4 mg/10 mga of lithium in 20 mL of anhydrous THF under stirring and in an argon atmosphere. After about 15 hours of stirring, the excess lithium is eliminated from the dark red resulting solution, which is cooled to 195K and 381 mg/5 mmoles of $CS_2$ are then added. After stirring for 30 minutes 1,044 g/4 mmoles of pentafluorobenzyl bromide are added and the temperature is left to rise to 298K. After a further 30 minutes of stirring, 100 mL of cyclohexane are added, the mixture is filtered, the filtrate is dried under reduced pressure and the residue is chromatographed on silica gel using a mixture of hexane/toluene (80/20) as eluant.
$^{1}$H-NMR/400MHz ($CDCl_3$, δ, ppm from TMS): 0.946 (s, 3H), 4.615 (s, 2H), 7.36-7.47 (m, 6H), 7.605 (d, J = 8.2 Hz, 4H) .
$^{13}$C-NMR/100MHz ($CDCl_3$, δ, ppm from TMS): -2.402, 29.842, 127.677, 127.886, 130.128, 132.817, 135.060, 137.43 (bd, $J_{CF}$ = 247.0 Hz), 140.69 (bd, $J_{CF}$ = 252.6 Hz), 145.17 (bd, $J_{CF}$ = 244.8 Hz), 258.931.
m/z: 197 ($m^+$ - $C_6F_5C$ (S) S) .

The catalysts prepared in the previous examples are now used in polymerization reactions of styrene. In all the preparations, the monomers were purified (to remove the inhibitors) and distilled under vacuum immediately before their use. The solutions for the polymerizations were degassed through three freezing-vacuum-nitrogen cycles. Once degassed, the vials were sealed under nitrogen and completely immersed in an oil bath at the temperature specified for the time indicated in the respective tables. The polymer obtained was purified by dissolving it in methylene chloride and precipitating it twice in methanol, it was then dried under vacuum at room temperature. The conversion was determined gravimetrically. The molecular weight and molecular weight distribution (polydispersity) were determined by

means of steric exclusion chromatography (SEC). A Hewlett Packard chromatograph was used, equipped with a PLgel Mixed-D column (molecular weight range 200-400,000) and two different detection systems, a refraction index detector and an ultraviolet detector. Tetrahydrofuran was used as eluant at a flow of 1 ml/min and a polystyrene standard for calibrating the column.

The terms Mn, Mw, Mw/Mn are used for indicating the average number molecular weight, the average weight molecular weight and the polydispersity of the polymers, respectively. The theoretical molecular weight [Mn (calc)] was calculated according to the following formula:

Mn (calc) = [monomer]/[raft agent] x conversion x Mw of the monomer.

EXAMPLE 6 (comparative)

A solution was prepared, containing styrene (13.0 ml, 113.6 mmoles), azobis isobutyronitrile (3.7 mg, 22.5 μmoles) and benzyl dithiobenzoate of Example 1 (30.0 mg, 123.0 μmoles).

Aliquots of this solution were removed and placed in a vial, degassed, sealed and then immersed in a thermostated bath at 60°C for the times indicated in Table 1.

Molar ratio styrene/1 = 930; molar ratio 1/AIBN = 5.4.

TABLE 1

| Test | Time/hours | Mn | Mw/Mn | Conv.% | Mn (calc) |
|---|---|---|---|---|---|
| **1** | 4 | 3950 | 1.21 | 2.8 | 2690 |
| **2** | 8 | 4550 | 1.27 | 3.0 | 2882 |
| **3** | 20 | 16600 | 1.10 | 14.6 | 14024 |
| **4** | 30 | 22600 | 1.15 | 19.1 | 18250 |

EXAMPLE 7

A solution was prepared, containing styrene (12.5 ml, 109.2 mmoles), azobis isobutyronitrile (3.5 mg, 21.3 μmoles) and benzyl triphenylsilyl dithioformiate prepared according to Example **2** (49.8 mg, 117.0 μmoles).

Aliquots of this solution were removed and placed in a vial, degassed, sealed and then immersed in a thermostated bath at 60°C for the times indicated in Table 2.

Molar ratio styrene/2 = 930; molar ratio 2/AIBN = 5.4.

TABLE 2

Test

Time/hours

Mn

Mw/Mn

Conv.%

**Mn (calc)**

EXAMPLE 8

A solution was prepared, containing styrene (8.7 ml, 76.1 mmoles), azobis isobutyronitrile (2.5 mg, 15.0 μmoles) and pentafluorobenzyl triphenylsilyl dithioformiate prepared according to Example **3** (42.0 mg, 81.4 μmoles).

Aliquots of this solution were removed and placed in a vial, degassed, sealed and then immersed in a thermostated bath at 60°C for the times indicated in Table 3.

Molar ratio styrene/3 = 930; molar ratio 3/AIBN = 5.4.

TABLE 3

| Test | Time/ hours | Mn | Mw/ Mn | Conv. % |
|---|---|---|---|---|
| **1** | 8 | 8600 | 1.22 | 7.6 |
| **2** | 14 | 14000 | 1.20 | 13.0 |
| **3** | 20 | 20000 | 1.18 | 20.5 |
| **4** | 30 | 26500 | 1.19 | 31.0 |

EXAMPLE 9

A solution was prepared, containing styrene (27.0 ml, 236.0 mmoles), azobis isobutyronitrile (7.6 mg, 46.3 μmoles) and benzyl methyl diphenylsilyl dithioformiate prepared according to Example **4** (91.8 mg, 252.2 μmoles).
Aliquots of this solution were removed and placed in a vial, degassed, sealed and then immersed in a thermostated bath at 60°C for the times indicated in Table 4.

Molar ratio styrene/4 = 930; molar ratio 4/AIBN = 5.4.

TABLE 4

| Test | Time/hours | Mn | Mw/Mn | Conv.% | Mn (calc) |
|---|---|---|---|---|---|
| **1** | 4 | 6600 | 1.30 | 6.0 | 4090 |
| **2** | 14 | 10800 | 1.27 | 12.0 | 7990 |
| **3** | 20 | 15500 | 1.30 | 18.3 | 12000 |
| **4** | 30 | 20000 | 1.22 | 23.7 | 15700 |

EXAMPLE 10

A solution was prepared, containing styrene (8.0 ml, 69.9 mmoles), azobis isobutyronitrile (2.3 mg, 14.0 μmoles) and pentafluorobenzyl methyl diphenylsilyl dithioformiate prepared according to Example **5** (33.6 mg, 74.0 μmoles).
Aliquots of this solution were removed and placed in a vial, degassed, sealed and then immersed in a thermostated bath at 60°C for the times indicated in Table 5.

Molar ratio styrene/5 = 930; molar ratio 5/AIBN = 5.4.

TABLE 5

| Test | Time/hours | Mn | Mw/Mn | Conv.% |
|---|---|---|---|---|
| **1** | 8 | 9000 | 1.22 | 8 |
| **2** | 14 | 13500 | 1.24 | 14 |
| **3** | 20 | 19000 | 1.23 | 21 |
| **4** | 30 | 27500 | 1.21 | 32 |

EXAMPLE 11 (Comparative)

A solution was prepared, containing styrene (4.0 ml, 35.0 mmoles) and polystyrene (0.1504 g) prepared according to the conditions of Example **6** (reaction time 20 hours, Mn 16600, Mw/Mn 1.10). Aliquots of this solution were removed and placed in a vial, degassed, sealed and then immersed in a thermostated bath at 90°C for the times indicated in Table 6.

TABLE 6

| Test | Time/hours | Mn | Mw/Mn | Conv.% |
|---|---|---|---|---|
| **1** | 4 | 64800 | 1.20 | 10.1 |
| **2** | 15 | 79800 | 1.38 | 18.8 |

EXAMPLE 12

A solution was prepared, containing styrene (4.0 ml, 35.0 mmoles) and polystyrene (0.1508 g) prepared according to the conditions of Example **7** (reaction time 16 hours, Mn 12750, Mw/Mn 1.14). Aliquots of this solution were removed and placed in a vial, degassed, sealed and then immersed in a thermostated bath at 90°C for the times indicated in Table 7.

TABLE 7

| Test | Time/hours | Mn | Mw/Mn | Conv.% |
|---|---|---|---|---|
| **1** | 4 | 46500 | 1.27 | 7.8 |
| **2** | 15 | 56700 | 1.43 | 19.2 |

EXAMPLE 13 (Comparative)

A solution was prepared, containing styrene (2.0 ml, 17.5 mmoles), AIBN (0.2 mg, 1.2 μmoles) and polystyrene (0.1004 g) prepared according to the conditions of Example **6** (reaction time 20 hours, Mn 16600, Mw/Mn 1.10). This solution was placed in a vial, degassed, sealed and then immersed in a thermostated bath at 60°C for 24 hours. The results are indicated in Table 8.

TABLE 8

| Test | Time/hours | Mn | Mw/Mn | Conv.% |
|---|---|---|---|---|
| **1** | 24 | 64100 | 1.36 | 16.9 |

EXAMPLE 14

A solution was prepared, containing styrene (2.0 ml, 17.5 mmoles), AIBN (0.2 mg, 1.2 μmoles) and polystyrene (0.0764 g) prepared according to the conditions of Example **7** (reaction time 16 hours, Mn 12750, Mw/Mn 1.14).This solution was placed in a vial, degassed, sealed and then immersed in a thermostated bath at 60°C for 24 hours. The results are indicated in Table 9.

TABLE 9

| Test | Time/hours | Mn | Mw/Mn | Conv.% |
|---|---|---|---|---|
| **1** | 24 | 74600 | 1.33 | 17.6 |

EXAMPLE 15

A solution was prepared, containing styrene (2.2 ml, 19.4 mmoles), acrylonitrile (0.78 ml, 11.8 mmoles), AIBN (0.35 mg, 2.14 μmoles) and polystyrene (0.087 g) prepared according to the conditions of Example **9** (reaction time 8 hours, Mn 8100, Mw/Mn 1.37). This solution was placed in a vial, degassed, sealed and then immersed in a thermostated bath at 60°C for 20 hours. The results are indicated in Table 10.

TABLE 10

| Test | Time/hours | Mn | Mw/Mn | Conv.% |
|---|---|---|---|---|
| **1** | 20 | 143000 | 1.55 | 31.2 |

EXAMPLE 16

A solution was prepared, containing styrene (3.40 ml, 29.7 mmoles), acrylonitrile (1.20 ml, 18.2 mmoles), AIBN (0.35 mg, 2.14 µmoles) and polystyrene (0.240 g) prepared according to the conditions of Example **9** (reaction time 20 hours, Mn 22500, Mw/Mn 1.35). This solution was placed in a vial, degassed, sealed and then immersed in a thermostated bath at 60°C for 20 hours. The results are indicated in Table 11.

TABLE 11

| Test | Time/hours | Mn | Mw/Mn | Conv.% |
|---|---|---|---|---|
| **1** | 20 | 179000 | 1.53 | 28.0 |

## Claims

1. A living radical polymerization process of olefinically unsaturated monomers which comprises (co)polymerizing an olefin with a catalytic system comprising:
a thioester containing silicon atoms having general formula (I)

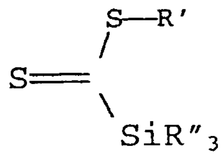

wherein R' is a $C_3$-$C_{20}$ alkyl or $C_7$-$C_{20}$ alkyl aryl group, whereas the R" groups, the same or different, represent a phenyl group, a $C_1$-$C_{10}$ alkyl group, a $C_7$-$C_{20}$ alkyl aryl group; and optionally
a free radical generator, soluble in the reaction medium, active at the (co)polymerization temperature.

2. The process according to claim 1, wherein the olefin is selected from vinyl aromatic monomers used alone or in a mixture with 0-50% by weight of other olefinically unsaturated monomers.

3. The process according to claim 2, wherein the vinyl aromatic monomer corresponds to the following general formula (II):

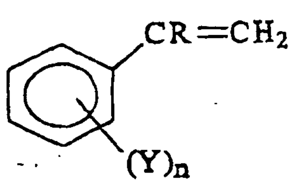

(II)

wherein R is a hydrogen or methyl group, n is zero or an integer ranging from 1 to 5 and Y is a halogen, such as chlorine or bromine, or an alkyl or alkoxyl radical having from 1 to 4 carbon atoms.

4. The process according to claim 2, wherein the copolymerizable monomers are (meth)acrylic acid, $C_1$-$C_4$ alkyl esters of (meth)acrylic acid such as methyl acrylate, methyl methacrylate, ethyl acrylate, ethyl methacrylate, isopropyl acrylate, butyl acrylate, amides and nitriles of (meth)acrylic acid such as acryl amide, methacryl amide, acrylonitrile, methacrylonitrile, butadiene, ethylene, divinyl benzene, maleic anhydride.

5. The process according to any of the previous claims, wherein the (co)polymerization is carried out at a temperature higher than 50°C.

6. The process according to any of the previous claims, wherein the initiator having general formula (I) is present in concentrations ranging from 0.01 to 2% in moles with respect to the total moles of the monomers fed.

7. The process according to any of the previous claims, wherein the initiator having general formula (I) is used in a mixture with radical generator compounds (G) selected from peroxides, hydroperoxides, peresters, percarbonates, azobis dialkyl dinitriles, with I/G molar ratios lower than 8.

8. The process according to claim 7, wherein the initiator having general formula (I) is used with free radical generators (G) selected from dibenzoyl peroxide, dicumyl peroxide, dilauryl peroxide, t-butyl peroxy acetate, t-butyl peroxy benzoate, di-isopropyl peroxy dicarbonate, dicyclohexyl peroxy dicarbonate, N,N'-azobis isobutyronitrile (AIBN) with I/G molar ratios ranging from 1 to 8.

9. The process according to any of the previous claims, wherein the (co)polymerization is carried out batchwise, in continuous, or semi-continuous at a temperature higher than 50°C, at a pressure which is such as to maintain the monomers in liquid phase and in the presence of an organic solvent or in suspension or in mass.

10. Organic derivatives of silicon having general formula (I)

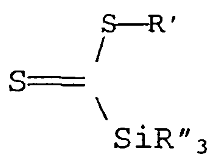

wherein R' is a $C_3$-$C_{20}$ alkyl or $C_7$-$C_{20}$ alkyl aryl group, whereas the R" groups, the same or different, represent a phenyl group, a $C_1$-$C_{10}$ alkyl group, a $C_7$-$C_{20}$ alkyl aryl group.

**Patentansprüche**

1. Verfahren zur lebenden Radikalpolymerisation olefinisch ungesättigter Monomere, welches (Ko)polymerisieren eines Olefins mit einem katalytischen System einschließt, umfassend:

einen Thioester enthaltend Siliziumatome mit der allgemeinen Formel (I)

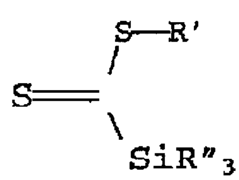

worin R' eine $C_3$-$C_{20}$-Alkyl- oder eine $C_7$-$C_{20}$-Alkylarylgruppe ist, wohingegen die Gruppen R", gleich oder verschieden, eine Phenylgruppe, eine $C_1$-$C_{10}$-Alkylgruppe, eine $C_7$-$C_{20}$-Akylarylgruppe sind, sowie

optional einen Erzeuger freier Radikaler, welcher in dem Reaktionsmedium löslich und bei der (Ko)Polymerisationstemperatur wirksam ist.

2. Verfahren nach Anspruch 1, wobei das Olefin aus vinylaromatischen Monomoren, entweder alleine oder in einer Mischung mit
0-50 Gew.-% anderer olefinisch ungesättigter Monomere eingesetzt, ausgewählt ist.

3. Verfahren nach Anspruch 2, wobei das vinylaromatische Monomer der nachfolgenden allgemeinen Formel (II) entspricht:

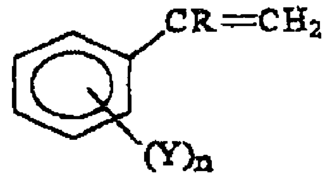

worin R ein Wasserstoff oder eine Methylgruppe ist, n entweder 0 oder eine ganze Zahl zwischen 1 und 5 ist und Y ein Halogen, wie beispielsweise Chlor oder Brom, oder ein Alkyl- oder ein Alkoxyl-Radikal mit 1 bis 4 Kohlenstoffatomen ist.

**4.** Verfahren nach Anspruch 2, wobei die kopolymerisierbaren Monomere (Meth)acrylsäure, $C_1$-$C_4$-Akylester von (Meth)acrylsäure, wie beispielsweise Methylacrylat, Methylmethacrylat, Ethylacrylat, Ethylmethacrylat, Isopropylacrylat, Butylacrylat, Amide und Nitride von (Meth)acrylsäure, wie beispielsweise Acrylamid, Methacrylamid, Acrylnitril, Methacrylnitril, Butadien, Ethylen, Divinylbenzol, Maleinsäureanhydrid, sind.

**5.** Verfahren nach einem der vorstehenden Ansprüche, wobei die (Ko)polymerisation bei einer Temperatur von mehr als 50°C durchgeführt wird.

**6.** Verfahren nach einem der vorstehenden Ansprüche, wobei der Initiator mit der allgemeinen Formel (I) in Konzentrationen von 0,01 bis 2 Mol.-% bezogen auf die Gesamtmolzahl der eingesetzten Monomere vorliegt.

**7.** Verfahren nach einem der vorstehenden Ansprüche, wobei der Initiator mit der allgemeinen Formel (I) in Mischung mit Radikal erzeugenden Verbindungen (G) ausgewählt aus Peroxiden, Hydroperoxiden, Perestern, Percarbonaten, Azobis(dialkyldinitrilen), mit molaren Verhältnissen I/G von weniger als 8 eingesetzt wird.

**8.** Verfahren nach Anspruch 7, wobei der Initiator mit der allgemeinen Formel (I) mit freien Radikalerzeugem (G) ausgewählt aus Dibenzoylperoxid, Dicumylperoxid, Dilaurylperoxid, t-Butylperoxyacetat, t-Butylperoxybenzoat, Diisopropylperoxydicarbonat, Di-cyclo-hexylperoxydicarbonat, N,N'-Azobis(isobutyronitril) (AIBN) mit molaren Verhältnissen I/G zwischen 1 und 8 eingesetzt wird.

**9.** Verfahren nach einem der vorstehenden Ansprüche, wobei die (Ko)polymerisation chargenweise, kontinuierlich oder semikontinuierlich bei einer Temperatur von mehr als 50°C, bei einem Druck, welcher derart ist, um die Monomere in flüssiger Phase zu halten, und in Anwesenheit eines organischen Lösungsmittels oder in Suspension oder in Masse durchgeführt wird.

**10.** Organische Derivate von Silizium mit der allgemeinen Formel (I)

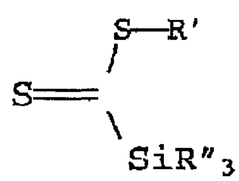

worin R' eine $C_3$-$C_{20}$-Alkyl- oder eine $C_7$-$C_{20}$-Alkylaryl-Gruppe ist, wohingegen die Gruppen R", gleich oder verschieden, eine Phenylgruppe, eine $C_1$-$C_{10}$-Alkylgruppe oder eine $C_7$-$C_{20}$-Alkylarylgruppe sind.

## Revendications

**1.** Procédé de polymérisation radicalaire vivante de monomères à insaturation oléfinique, qui comprend la (co)polymérisation d'une oléfine avec un système catalytique comprenant :
un thioester contenant des atomes de silicium, de formule générale (I) :

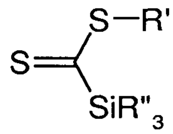

dans laquelle R' est un groupe alkyle en $C_3$-$C_{20}$ ou alkylaryle en $C_7$-$C_{20}$, tandis que les groupes R", identiques ou différents, représentent un groupe phényle, un groupe alkyle en $C_1$-$C_{10}$, un groupe alkylaryle en $C_7$-$C_{20}$ ; et éventuellement

un générateur de radicaux libres, soluble dans le milieu réactionnel, actif à la température de (co)polymérisation.

2. Procédé selon la revendication 1, dans lequel l'oléfine est choisie parmi les monomères vinyliques aromatiques utilisés seuls ou en mélange avec 0-50 % en poids d'autres monomères à insaturation oléfinique.

3. Procédé selon la revendication 2, dans lequel le monomère vinylique aromatique correspond à la formule générale (II) suivante :

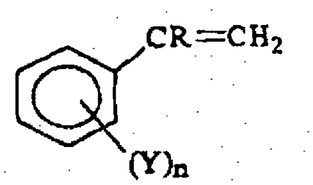

(II)

dans laquelle R est un hydrogène ou un groupe méthyle, n vaut zéro ou est un entier situé dans la plage allant de 1 à 5 et Y est un halogène, tel que le chlore ou le brome, ou un radical alkyle ou alcoxy ayant de 1 à 4 atomes de carbone.

4. Procédé selon la revendication 2, dans lequel les monomères copolymérisables sont l'acide (méth)acrylique, les esters alkyliques en $C_1$-$C_4$ d'acide (méth)acrylique tels que l'acrylate de méthyle, le méthacrylate de méthyle, l'acrylate d'éthyle, le méthacrylate d'éthyle, l'acrylate d'isopropyle, l'acrylate de butyle, les amides et nitriles d'acide (méth)acrylique tels que l'acrylamide, le méthacrylamide, l'acrylonitrile, le méthacrylonitrile, le butadiène, l'éthylène, le divinylbenzène, l'anhydride maléique.

5. Procédé selon l'une quelconque des revendications précédentes, dans lequel la (co)polymérisation est mise en oeuvre à une température supérieure à 50°C.

6. Procédé selon l'une quelconque des revendications précédentes, dans lequel l'amorceur de formule générale (I) est présent à des concentrations situées dans la plage allant de 0,01 à 2 % en moles par rapport aux moles totales des monomères introduits.

7. Procédé selon l'une quelconque des revendications précédentes, dans lequel l'amorceur de formule générale (I) est utilisé en mélange avec des composés générateurs de radicaux (G) choisis parmi les peroxydes, les hydroperoxydes, les peresters, les percarbonates, les azobisdialkyldinitriles, avec des rapports molaires I/G inférieurs à 8.

8. Procédé selon la revendication 7, dans lequel l'amorceur de formule générale (I) est utilisé avec des générateurs de radicaux libres (G) choisis parmi le peroxyde de dibenzoyle, le peroxyde de dicumyle, le peroxyde de dilauryle, le peroxyacétate de t-butyle, le peroxybenzoate de t-butyle, le peroxydicarbonate de diisopropyle, le peroxydicarbonate de dicyclohexyle, le N,N'-azobisisobutyronitrile (AIBN) avec des rapports molaires I/G situés dans la plage allant de 1 à 8.

9. Procédé selon l'une quelconque des revendications précédentes, dans lequel la (co)polymérisation est mise en oeuvre en discontinu, en continu, ou en semi-continu, à une température supérieure à 50°C, sous une pression telle qu'elle maintient les monomères en phase liquide, et en présence d'un solvant organique ou en suspension

ou en masse.

**10.** Dérivés organiques de silicium de formule générale (I) :

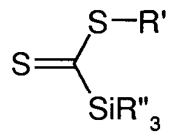

dans laquelle R' est un groupe alkyle en $C_3$-$C_{20}$ ou alkylaryle en $C_7$-$C_{20}$, tandis que les groupes R", identiques ou différents, représentent un groupe phényle, un groupe alkyle en $C_1$-$C_{10}$, un groupe alkylaryle en $C_7$-$C_{20}$.